Europäisches Patentamt

European Patent Office

Office européen des brevets

(11) Veröffentlichungsnummer: **0 510 300 A2**

# (12) EUROPÄISCHE PATENTANMELDUNG

(21) Anmeldenummer: **92101048.4**

(22) Anmeldetag: **23.01.92**

(51) Int. Cl.5: **F21L 9/00, F21V 23/06**

(30) Priorität: **25.04.91 DE 9105127 U**

(43) Veröffentlichungstag der Anmeldung:
**28.10.92 Patentblatt 92/44**

(84) Benannte Vertragsstaaten:
**AT BE CH DK ES FR GB GR IT LI LU NL SE**

(71) Anmelder: **ERICH JÄGER GmbH & Co. KG
Gluckensteinweg 5a
W-6380 Bad Homburg v.d. H. 1(DE)**

(72) Erfinder: **Wiese,Wolfgang,Dipl.-Ing.
Bruchwiesenweg 4a
W-6393 Wehrheim 2(DE)**

(74) Vertreter: **Keil, Rainer A., Dipl.-Phys. Dr. et al
KEIL & SCHAAFHAUSEN Patentanwälte
Eysseneckstrasse 31
W-6000 Frankfurt am Main 1(DE)**

(54) **Taschenlampe.**

(57) Die Erfindung bezieht sich auf eine Taschenlampe mit einem einen aufladbaren Akkumulator aufnehmenden Gehäuse (4), wobei der Akkumulator wahlweise über einen 220 Volt-Stecker (2), bspw. an einer Netzsteckdose, oder über einen an einem Ende des Gehäuses (4) in dessen Hauptstreckungsrichtung weisend vorgesehenen 12 Volt-Stecker (3), bspw. an einer von einer Batterie versorgten Steckbuchse eines Kraftfahrzeuges, aufladbar ist, wobei der 220 Volt-Stecker (2) aus einer Seitenwand (6, 14) des Gehäuses (4) in seine Benutzungs- bzw. Ladestellung herausklappbar oder -schiebbar ist.

FIG.6

EP 0 510 300 A2

Die Erfindung bezieht sich auf eine Taschenlampe oder Handlampe mit einem einen aufladbaren Akkumulator aufnehmenden Gehäuse, wobei der Akkumulator wahlweise über einen 220 Volt-Stecker, bspw. an einer Netzsteckdose, oder über einen an einem Ende des Gehäuses in dessen Haupterstreckungsrichtung weisend vorgesehenen 12 Volt-Stecker, bspw. an einer von einer Batterie versorgten Steckbuchse eines Kraftfahrzeuges, aufladbar ist. Die angegebenen Spannungswerte sind nur beispielhaft, weil sie als Netz- und Batteriespannung häufig vorkommen. Selbstverständlich können derartige Taschen- oder Handlampen im Rahmen der Erfindung auch für jede andere Netzspannung, wie bspw. 120 Volt, einerseits und jede andere Batteriespannung, bspw. 24 Volt, ausgelegt sein.

Eine bekannte Taschen- oder Handlampe der eingangs genannten Art besteht im wesentlichen aus drei Teilen, einem die Leuchtkappe tragenden Gehäuse, einem den Akkumulator aufweisenden Mittelteil und einem hinteren Kappenteil. Der Mittelteil ist einerseits mit einem Netzstecker und andererseits mit einem Niedervoltstecker, bspw. zum Anschluß an die Zigarettenanzünderbuchse ausgestattet. Der Akkumulator kann somit entweder mit der Netzspannung oder mit der Batteriespannung des Kraftfahrzeugs aufgeladen werden. Die drei Teile können zu einer Einheit zusammengesteckt werden. In diesem Fall wird dem Birnchen der Strom von dem Akkumulator über einen Kontakt in dem 12 Volt-Stecker zugeführt. Die drei Teile sind über ein flexibles Band miteinander verbunden, so daß sie bei dem Freilegen der Anschlußstecker lose miteinander verbunden bleiben. Die Handhabung des dreiteiligen Gebildes zum Aufladen bedarf einer erheblichen Geschicklichkeit. Beim Aufladen hängt zudem immer mindestens ein Teil von dem in die Steckdose oder Steckbuchse eingesteckten Mittelteil nach unten, was insbesondere bei der Aufladung im Kraftfahrzeug wegen der auftretenden Bewegungen zu unerwünschten Schwingungen und unter Umständen auch Klappergeräuschen führt. Außerdem neigt die bekannte Taschen- oder Handlampe vor Verschmutzung im Inneren, da insbesondere bei der Aufladung im Kraftfahrzeug der die Leuchtkappe aufweisende Teil mit dem darin angeordneten Birnchen im Kontaktbereich freiliegt. Für bestimmte Kraftfahrzeugtypen sind auch Taschen- oder Handlampen bekannt, welche bei Nichtbenutzung ständig in eine, z.B. im Handschuhfach vorgesehene und von der Batterie versorgte besondere Steckdose eingesteckt sind, um wieder aufgeladen zu werden. Diese Taschen- oder Handlampen sind verhältnismäßig kompakt, haben jedoch nur eine Anschluß- und dadurch auch nur eine Auflademöglichkeit an der Kraftfahrzeugbatterie, was verhältnismäßig lange dauert.

Aufgabe der vorliegenden Erfindung ist es, eine Taschen- oder Handlampe der eingangs genannten Art kompakt und bei der Aufladung am Netz und an der Kraftfahrzeugbatterie einfach handhabbar auszugestalten.

Diese Aufgabe wird erfindungsgemäß im wesentlichen dadurch gelöst, daß der 220 Volt-Stecker aus einer Seitenwand des Gehäuses in seine Benutzungsstellung herausklappbar oder- schiebbar ist.

Eine solche Taschenlampe ist ebenso kompakt wie die bekannte Taschen- oder Handlampe, welche jedoch lediglich an der besonderen Batteriesteckdose im Kraftfahrzeug aufladbar ist. Für die Aufladung im Kraftfahrzeug braucht die erfundene Taschenlampe lediglich in die hierfür vorgesehene Steckdose eingesteckt zu werden, ohne daß irgendwelche Veränderungen an der Lampe selbst vorgenommen werden müßten. Für ein schnelleres Aufladen am Netz braucht lediglich der 220 Volt-Stecker seitlich aus dem Gehäuse herausgeklappt oder herausgeschoben zu werden, um in seine Aufladestellung überführt zu werden. In der Ruhelage ist der 220 Volt-Stecker jedoch in das Gehäuse eingesenkt, so daß er bei der Benutzung der Lampe nicht stört.

Bei einer besonderen Ausgestaltung der Erfindung ist der 220 Volt-Stecker um eine Längsachse oder eine Querachse - bezogen auf die Einsteckrichtung des 12 Volt-Steckers - klappbar oder in Querrichtung - bezogen auf die Einsteckrichtung für des 12 Volt-Steckers - verschiebbar.

Der 220 Volt-Stecker kann im Rahmen der zu lösenden Aufgabe, insbesondere hinsichtlich der gewünschten Kompaktheit derart in eine Durchbrechung oder Vertiefung der Seitenwand in eine Ruhestellung einklappbar sein, daß, ggf. im Zusammenwirken mit einem weiteren Klappelement oder Schiebeelement, die Durchbrechung oder Vertiefung in Eingeklappstellung unter Abdeckung der Kontaktstifte des 220 Volt-Steckers geschlossen sein. Hierdurch wird eine Verschmutzung des Gehäuseinneren und insbesondere auch der Kontakte des 220 Volt-Steckers weitgehend vermieden.

Auch im Hinblick auf ein ansprechendes Aussehen kann bei einer weiteren Ausgestaltung der Erfindung dafür Sorge getragen werden, daß in der Einklappstellung die äußere Oberfläche des 220 Volt-Steckers und ggf. des weiteren Klappelements oder des Schiebeelements mit der angrenzenden Oberfläche des Gehäuses fluchtet.

Die erfindungsgemäße Taschenlampe läßt sich einfach herstellen und bei dauerhaft zuverlässiger Funktion einfach montieren, wenn die Kontaktstifte des 220 Volt-Steckers von einem plattenförmigen, an dem Gehäuse angelenkten Klappelement gehalten sind, welches sich mit dem weiteren ebenfalls an dem Gehäuse angelenkten weiteren Klappelement oder dem Schiebeelement zu einem Verschluß der Durchbrechung oder Vertiefung des Gehäuses ergänzt. Hierdurch kann gleichzeitig dafür Sorge getragen werden, daß die Vertiefung zur Vermeidung von Verschmutzungen praktisch vollständig abgedeckt ist.

Der Kompaktheit dient es auch, wenn das weitere Klappelement oder das Schiebeelement auf seiner Innenseite nutförmige Aussparungen für die Aufnahme der Kontaktstifte des 220 Volt-Steckers in der Einklappstellung aufweist.

Es können aber auch zu dem gleichen Zwecke in einer nach außen weisenden Gehäusefläche nutenförmige Aussparungen für die Aufnahme der Kontaktstifte des 220 Volt-Steckers in Einklappstellung vorgesehen sein.

Die Klappelemente lassen sich von Hand einfacher aus ihrer Verschlußstellung in ihre Öffnungsstellung überführen, wenn wenigstens eines der Klappelemente eine Eingriffsvertiefung aufweist.

Während im Falle des Klappens des 220 Volt-Steckers dessen Kontaktstifte an einem Klappelement vorgesehen sind, ist der 220 Volt-Stecker bei der verschiebbaren Lösung als ein die Kontaktstifte tragender Schieber aus dem Gehäuse herausschiebbar; in eingeschobener Stellung ist der Schieber einschließlich der Kontaktstifte des 220 Volt-Steckers in einer Ausnehmung des Gehäuses eingesenkt, so daß auch hier der 220 Volt-Stecker bei Bedarf einfach zugänglich, im übrigen aber weitgehend geschützt in dem Gehäuse aufgenommen ist, so daß die Benutzung der Taschenlampe durch ihn nicht beeinträchtigt wird.

Der Schieber kann zur Überführung aus seiner zurückgezogenen Ruhestellung in seine herausgeschobene Ladestellung, und umgekehrt, bspw. mittels eines handbedienbaren Schiebeschalters durch die eine Seitenwand des Gehäuses hindurchragen, welche sich an die Seitenwand anschließt, welche die Ausnehmung aufweist.

Wenn das Gehäuse der Taschen- oder Handlampe im wesentlichen quaderförmige Grundgestalt hat, kann der 220 Volt-Stecker bspw. an einer Flachseite des Gehäuses herausklappbar sein. Es ist aber auch möglich den 220 Volt-Stecker in dem Steckergehäuse zu positionieren, bspw. derart, daß der 220 Volt-Stecker aus einer Schmalseite des Gehäuses herausschiebbar ist.

In weiterer Ausgestaltung der Erfindung kann der 12 Volt-Stecker einen die Kontaktstifte der 12 Volt-Steckers bis auf eine Einsteköffnung umschließenden Gehäusemantel aufweisen, welcher sich auf dem der Leuchtkappe gegenüberliegenden Ende des Gehäuses anschließt.

Ähnlich ist es möglich, daß der 12 Volt-Stecker einen seine Kontaktstifte bis auf eine Einsteköffnung umschließenden Gehäusemantel aufweist, welcher Teil des Schiebeelements ist. Dabei ist das Schiebeelement vorzugsweise an dem der Leucht

kappe gegenüberliegenden Ende des Gehäuses verschiebbar gelagert, an welchem Ende vorzugsweise auch der 12 Volt-Stecker ausgebildet ist.

Zur Einhaltung der erforderlichen Sicherheitsvorschriften (insbesondere VDE-Vorschriften) kann es von besonderem Vorteil sein, wenn das Schiebeelement bei herausgeklapptem 220 Volt-Stecker in seiner Öffnungsschiebestellung verriegelt ist, vorzugsweise durch das Herausklappen des 220 Volt-Steckers selbst in seiner Öffnungsschiebestellung verriegelt ist. Das Verschiebeelement kann also erst in seiner Verschlußstellung zurück überführt werden, wenn der 220 Volt-Stecker wieder ins eine Ruhestellung geklappt ist.

Diese Maßnahme ist insbesonder dann von Bedeutung, wenn die Einsteköffnung des Schiebeelements in seiner Öffnungsschiebestellung in einem solchen Abstand relativ von den Enden der Kontaktstifte des 12 Volt-Steckers gebracht ist, daß beim Einstecken des Gehäusemantels in die Steckbuchse ein Kontaktanschluß zu der 12 Volt-Stromquelle verhindert ist. Auf diese Weise haben die Kontaktstifte hinreichend großen Isolationsabstand voneinander.

Weiter Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung auch unabhängig von ihrer Zusammenfassung in den Ansprüchen oder deren Rückbeziehung.

Es zeigen:Es zeigen:

Fig. 1 u. 2 jeweils in Schrägansicht eine die Erfindung aufweisende Taschenlampe in Einklappstellung des 220 Volt-Steckers (Fig. 1) und bei herausgeklapptem 220 Volt-Stekker (Fig. 2),

Fig. 3 u. 4 ähnliche Darstellungen bei einer Ausgestaltung der Erfindung, bei welcher der 220 Volt-Stecker quer zur Längsachse aus dem Gehäuse herausgeschoben werden kann, und

Fig. 5 u. 6 eine noch weitere Ausgestaltung der Erfindung, bei welcher der 220 Volt-Stecker in Längsrichtung der Taschenlampe klappbar ist und in Einklappstellung jedenfalls im Bereich der Kontaktstifte und der Seitenränder von entsprechenden Wandabschnitten eines Schiebeelements abdeckbar ist.

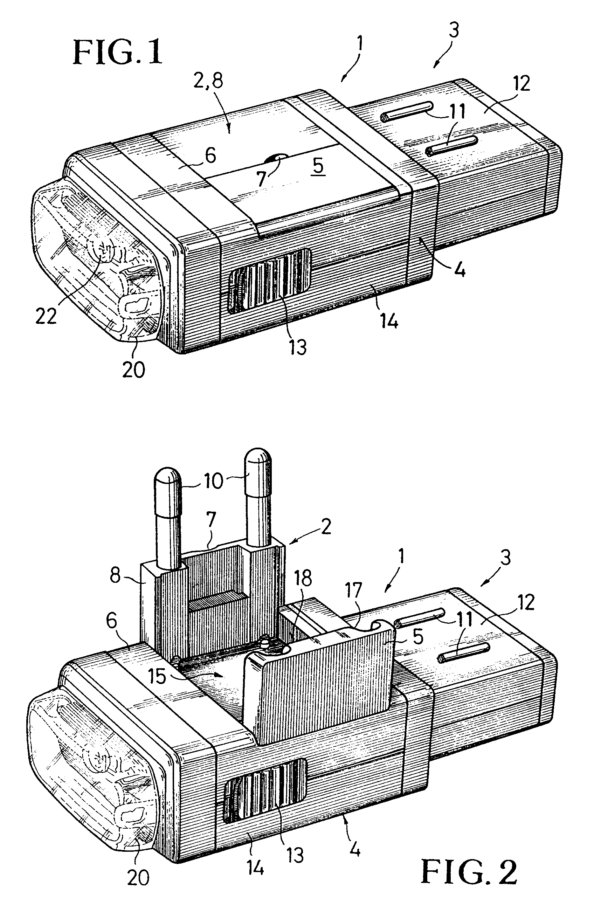

Die einen Akkumulator aufweisende Taschen- oder Handlampe 1 weist zum Aufladen des Akkumulators sowohl einen 220 Volt-Stecker 2 zum Anschluß an einer Netzsteckdose als auch einen 12 Volt-Stecker 3 zum Anschluß an eine mit der Batterie eines Kraftfahrzeugs verbundenen Steckbuchse auf. Der Akkumulator ist in einem Gehäuse 4 aufgenommen, welches im wesentlichen quaderförmige Gestalt hat. Am vorderen Ende des Gehäuses 4 ist eine Leuchtkappe 20 mit Birnchen 22 aufgesteckt. Am hinteren Ende geht das Gehäuse 4 unter einem Absatz in einen Gehäusemantel 12 des 12 Volt-Steckers 3 über, welcher die angedeuteten Kontaktstifte 11 des 12 Volt-Steckers bis auf die hintere Einstecköffnung seitlich umschließt. In einer eine Schmalseite bildenden Seitenwand 14 ist ein Schiebeschalter zum Ein- und Ausschalten der Taschenlampe 1 verschiebbar gelagert. In einer eine Flachseite bildenden Seitenwand 6 ist ein die Kontaktstifte 10 des 220 Volt-Steckers 2 tragendes Klappelement 8 und ein dazu korrespondierentes weiteres Klappelement 5 einander gegenüberliegend jeweils gelenkig um eine Längsachse derart angeordnet, daß die beiden Klappelemente 5, 8 aus der in Fig. 1 dargestellten Verschlußstellung in die in Fig. 2 dargestellte Benutzungs- oder Ladestellung geschwenkt werden können. Das Öffnen der Klappelemente 5, 8 wird durch eine Eingriffsvertiefung erleichtert. Aus der Fig. 1 und 2 ist ersichtlich, daß in der Ruhestellung der 220 Volt-Stecker 2 in einer Durchbrechung oder Vertiefung 15 liegt und dabei die Kontakte 10 von dem weiteren Klappelement 5 abgedeckt sind. Hierdurch liegen diese geschützt und die Taschenlampe 1 hat auch im Bereich der Seitenwand 6 ein glattflächiges ansprechendes Aussehen. Auf der Innenfläche 18 des weiteren Klappelements 5 sind, wie aus Fig. 2 ersichtlich, nutenförmige Aussparungen 17 vorgesehen, welche durch Aufnahme der Kontaktstifte 10 zur Kompaktheit der Taschenlampe 1 beitragen.

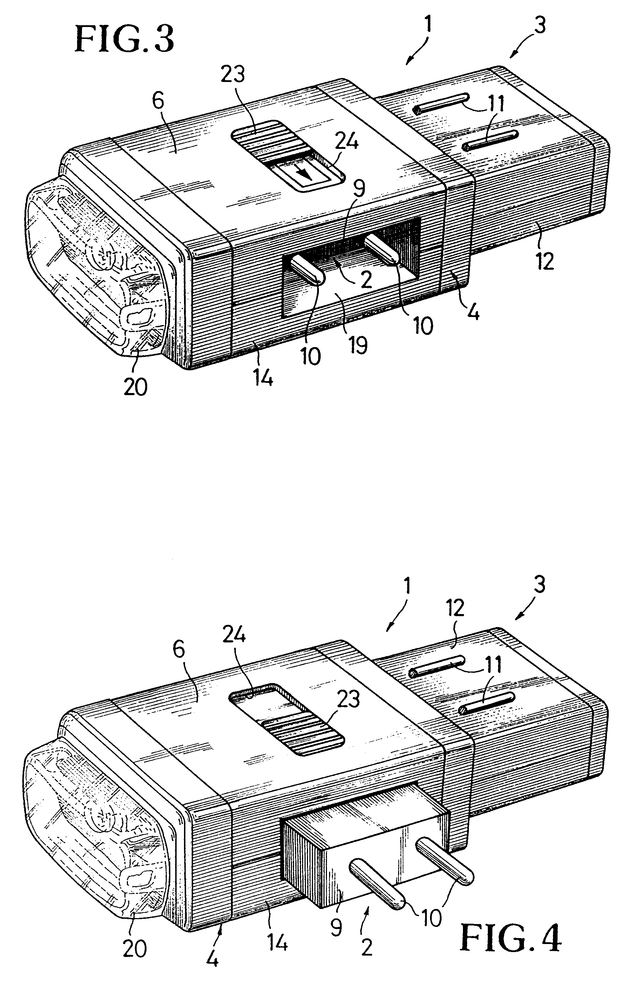

Die Grundform der Taschenlampe 1 ist bei der Ausgestaltung gemäß den Fig. 3 und 4 etwa die gleiche wie die zuvor beschriebene, nur ist hier der 220 Volt-Stecker 2 nicht aus der Seitenwand 6 einer Flachseite herausklappbar sondern aus der Seitenwand 14 einer Schmalseite herausschiebbar angeordnet. Zu diesem Zweck sind die Kontaktstifte 10 des 220 Volt-Steckers 2 von einem Schieber 9 getragen, welcher in einer seitlichen Ausnehmung 19 des Gehäuses 4 in der aus den Fig. 3 und 4 ersichtlichen Weise hin und her verschiebbar gelagert ist. Die Verschiebung erfolgt mittels eines Verschiebschalters 23, welcher durch die obere Seitenwand 6 des Gehäuses 4 hindurchragt und in einer Öffnung 24 der Seitenwand 6 geführt ist. In der herausgeschobenen Benutzungs- oder Ladestellung gemäß Fig. 4 kann der Schieber 9 und/oder der Schiebeschalter 23 in dem Gehäuse 4 arretiert sein.

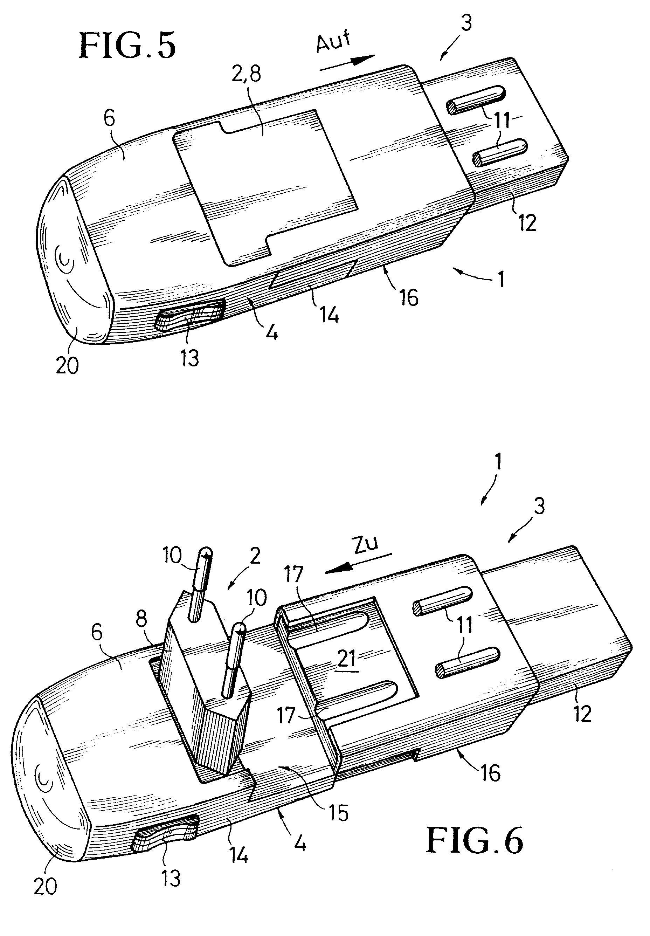

Bei der in den Fig. 5 und 6 veranschaulichten Ausgestaltung der Erfindung ist der 220 Volt-Stecker um eine Querachse aus der Durchbrechung oder Vertiefung 15 des Gehäuses 4 herausschwenkbar. In der in Fig. 5 dargestellten Ruhestellung schließt die Oberfläche des Klappelementes 8 bündig mit der Oberfläche der angrenzenden Seitenwand 6 ab. Als weitere Besonderheit enthält diese Taschenlampe 1 ein Schiebeelement 16, welches sich in Fig. 5 in seiner Schließstellung und in Fig. 6 in seiner Öffnungsstellung befindet. Der Gehäusemantel 12 des 12 Volt-Steckers 3 bildet ein Teil des Schiebeelements 16. Wie aus Fig. 5 ersichtlich überdeckt das Schiebeelement 16 in Schließstellung mit entsprechend geformten Wandungsteilen sowohl die Kontaktstifte 10 des 220 Volt-Steckers 2, welche in nutförmige Aussparungen 17 in einer Gehäusefläche 21 zu liegen kommen, als auch die abgeschrägten Seitenränder des Klappelements 8. So bieten entsprechend Fig. 5 Gehäuse 4, Klappelement 8 und Schiebeelement 16 ein geschlossenes Ganzes. Vor dem Herausklappen des 220 Volt-Steckers 2 wird das Schiebeelement 16 in Pfeilrichtung AUF (vgl. Fig. 5) weg von der Leuchtkappe 20 verschoben. Hierdurch kommen die Ränder des Klappelements 8 und die Kontaktstifte 10 frei, so daß der 220 Volt-Stecker herausgeklappt werden kann. In dieser Position des 220 Volt-Steckers 2 ist das Schiebeelement 16 gegen Einwärtsverschieben gesperrt. Wie sich aus einem Vergleich der Fig. 5 und 6 und der dort angedeuteten Kontaktstifte 11 des 12 Volt-Steckers 3 ergibt, haben die freien Enden der Kontaktstifte 11 in der in Fig. 6 dargestellten Stellung des Schiebeelements 16 einen solch großen Abstand von der endseitigen Einstecköffnung, daß eine Kontaktaufnahme zu den Gegenkontakten einer Steckbuchse aus Sicherheitsgründen nicht erreicht werden kann. Umgekehrt liegen beim Aufladen des Akkumulators mit Hilfe des 220 Volt-Steckers 2 die Kontaktstifte 11 weit geschützt im Innern des Schiebeelements 16. Das Schiebeelement 16 kann erst wieder in seine Schließstellung in Pfeilrichtung ZU verschoben werden, wenn der 220 Volt-Stecker 2 in seine flache Ruhestellung zurückgeschwenkt worden ist.

Bezugszeichenliste:

| | |
|---|---|
| 1 | Taschenlampe |
| 2 | 220 Volt-Stecker |
| 3 | 12 Volt-Stecker |
| 4 | Gehäuse |
| 5 | weiteres Klappelement |
| 6 | Seitenwand |
| 7 | Eingriffsvertiefung |
| 8 | Klappelement |
| 9 | Schieber |
| 10 | Kontaktstifte des 220 Volt-Steckers |

11 Kontaktstifte des 12 Volt-Steckers
12 Gehäusemantel
13 Schiebeschalter
14 Seitenwand
15 Durchbrechung oder Vertiefung
16 Schiebeelement
17 nutenförmige Aussparungen
18 Innenfläche
19 Ausnehmung
20 Leuchtkappe
21 Gehäusefläche
22 Birnchen
23 Schiebeschalter
24 Öffnung

**Patentansprüche**

1. Taschenlampe mit einem einen aufladbaren Akkumulator aufnehmenden Gehäuse (4), wobei der Akkumulator wahlweise über einen 220 Volt-Stecker (2), bspw. an einer Netzsteckdose, oder über einen an einem Ende des Gehäuses (4) in dessen Haupterstreckungsrichtung weisend vorgesehenen 12 Volt-Stecker (3), bspw. an einer von einer Batterie versorgten Steckbuchse eines Kraftfahrzeuges, aufladbar ist, dadurch gekennzeichnet, daß der 220 Volt-Stecker (2) aus einer Seitenwand (6, 14) des Gehäuses (4) in seine Benutzungsstellung herausklappbar oder -schiebbar ist.

2. Taschenlampe nach Anspruch 1, dadurch gekennzeichnet, daß der 220 Volt-Stecker (2) um eine Längsachse oder eine Querachse - bezogen auf die Einsteckrichtung des 12 Volt-Steckers (3) - klappbar oder in Querrichtung - bezogen auf die Einsteckrichtung des 12 Volt-Steckers (3) - verschiebbar ist.

3. Taschenlampe nach Anspruch 1 oder 2, dadurch gekennzeichnet, daß der 220 Volt-Stekker (2) derart in eine Durchbrechung oder Vertiefung (15) der Seitenwand (6) in seine Ruhestellung einklappbar ist, daß, ggf. in Zusammenwirken mit einem weiteren Klappelement (5) oder Schiebeelement (16), die Durchbrechung oder Vertiefung (15) in eingeklapptem Zustand unter Abdeckung der Kontaktstifte (10) des 220 Volt-Steckers (2) geschlossen ist.

4. Taschenlampe nach einem der vorhergehenden Ansprüche, dadurch gekennzeichnet, daß in der Einklapplage die äußere Oberfläche des 220 Volt-Steckers (2) und ggf. des weiteren Klappelements (5) oder des Schiebeelements (16) mit der angrenzenden Oberfläche des Gehäuses (4) fluchtet.

5. Taschenlampe nach einem der vorhergehenden Ansprüche, dadurch gekennzeichnet, daß die Kontaktstifte (10) des 220 Volt-Steckers (2) von einem plattenförmigen, an dem Gehäuse (4) angelenkten Klappelement (8) gehalten sind, welches sich mit dem weiteren ebenfalls an dem Gehäuse (4) angelenkten weiteren Klappelement (5) oder dem Schiebeelement (16) zu einem Verschluß der Durchbrechung oder Vertiefung (15) des Gehäuses (4) ergänzt.

6. Taschenlampe nach einem der vorhergehenden Ansprüche, dadurch gekennzeichnet, daß das weitere Klappelement (5) oder das Schiebeelement (16) auf seine Innenseite (18) nutenförmige Aussparung (17) für die Aufnahme der Kontaktstifte (10) des 220 Volt-Steckers (2) in der Einklappstellung aufweist.

7. Taschenlampe nach einem der vorhergehenden Ansprüche, dadurch gekennzeichnet, daß an einer nach außen weisenden Gehäusefläche (21) nutenförmige Aussparungen (17) für die Aufnahme der Kontaktstifte (10) des 220 Volt-Steckers (2) in Einklappstellung aufweist.

8. Taschenlampe nach einem der vorhergehenden Ansprüche, dadurch gekennzeichnet, daß wenigstens eines der Klappelemente (5, 8) eine Eingriffsvertiefung (7) aufweist.

9. Taschenlampe nach einem der vorhergehenden Ansprüche, dadurch gekennzeichnet, daß der 220 Volt-Stecker (8) als ein die Kontaktstifte (10) tragender Schieber (9) aus dem Gehäuse (4) herausschiebbar und in eingeschobener Stellung einschließlich seiner Kontaktstifte (10) in eine Ausnehmung (19) des Gehäuses (4) eingesenkt ist.

10. Taschenlampe nach einem der vorhergehenden Ansprüche, dadurch gekennzeichnet, daß der Schieber (9) mittels eines handbetätigbaren Schiebeschalters (23) durch die eine Seitenwand (6) des Gehäuses (4) hindurchragt, welches sich an die Seitenwand (14) anschließt, welche die Ausnehmung (19) aufweist.

11. Taschenlampe nach einem der vorhergehenden Ansprüche, wobei das Gehäuse (4) im wesentlichen quaderförmige Grundgestalt hat, dadurch gekennzeichnet, daß der 220 Volt-Stecker (2) aus einer Flachseite des Gehäuses (4) herausklappbar ist.

12. Taschenlampe nach einem der vorhergehenden Ansprüche, wobei das Gehäuse (4) im wesentlichen quaderförmige Grundgestalt hat, dadurch gekennzeichnet, daß der 220 Volt-Stecker (2) aus einer Schmalseite des Gehäuses (4) herausschiebbar ist.

13. Taschenlampe nach einem der vorhergehenden Ansprüche, dadurch gekennzeichnet, daß der 12 Volt-Stecker (3) einen die Kontaktstifte (11) des 12 Volt-Steckers (3) bis auf eine Einstecköffnung umschließenden Gehäusemantel (12) aufweist, welche sich auf dem der Leuchtkappe (20) gegenüberliegenden Ende an das Gehäuse (4) anschließt.

14. Taschenlampe nach einem der vorhergehenden Ansprüche, dadurch gekennzeichnet, daß der 12 Volt-Stecker (3) einen seine Kontaktstifte (11) bis auf eine Einstecköffnung umschließenden Gehäusemantel (12) aufweist, welcher Teil des Schiebeelements (16) ist.

15. Taschenlampe nach einem der vorhergehenden Ansprüche, dadurch gekennzeichnet, daß das Schiebeelement (16) an dem der Leuchtkappe (20) gegenüberliegenden Ende des Gehäuses (4) verschiebbar gelagert ist, an welchem Ende auch der 12 Volt-Stecker (3) ausgebildet ist.

16. Taschenlampe nach einem der vorhergehenden Ansprüche, dadurch gekennzeichnet, daß das Schiebeelement (16) bei herausgeklapptem 220 Volt-Stecker (2) in seiner Öffnungsschiebestellung verriegelt ist, vorzugsweise durch das Herausklappen des 220 Volt-Steckers (2) selbst in seiner Öffnungsschiebestellung verriegelt wird.

17. Taschenlampe nach einem der vorhergehenden Ansprüche, dadurch gekennzeichnet, daß die Einstecköffnung des Schiebeelements (16) in seiner Öffnungsschiebestellung in einem solchen Abstand relativ von den Enden der Kontaktstifte (11) des 12 Volt-Steckers (3) gebracht ist, daß beim Einstecken des Gehäusemantels (12) in die Steckbuchse ein Kontaktanschluß zu der 12 Volt-Stromquelle verhindert ist.

FIG.1

FIG.2

FIG.3

FIG.4

FIG.5

Auf

FIG.6

Zu